# FASCICULE DE BREVET EUROPEEN

(11) **EP 0 694 100 B1**
(45) Date de publication et mention de la délivrance du brevet: **16.07.1997**
(21) Numéro de dépôt: 94913652.7
(22) Date de dépôt: 15.04.1994
(51) Int. Cl.: E02F 5/10, B63B 35/06, H02G 1/10

(54) **PROCEDE ET DISPOSITIF DE POSE ET D'ENSOUILLAGE EN CONTINU D'UNE CONDUITE FLEXIBLE SOUS-MARINE**
VERFAHREN UND VORRICHTUNG ZUM KONTINUIERLICHEN VERLEGEN UND EINGRABEN EINER BIEGSAMEN LEITUNG UNTER WASSER
METHOD AND DEVICE FOR CONTINUOUSLY LAYING AND BURYING A FLEXIBLE SUBMARINE CABLE

(30) Priorité: 21.04.1993 FR 9304682
(43) Date de publication de la demande: 31.01.1996
(73) Titulaire: COFLEXIP, 92100 Boulogne-Billancourt (FR)
(72) Inventeur: PETERSON, Kevin c/o COFLEXIP, F-92100 Boulogne-Billancourt (FR)
(74) Mandataire: Levy, David
(86) Numéro de dépôt international: FR9400425
(87) Numéro de publication internationale: WO9424377

(56) Documents cités:
- FR-A- 2 278 854
- US-A- 4 010 619
- BAUMASCHINE + BAUTECHNIK - BMT, vol.28, no.6, Juin 1981, WIESBADEN DE pages 301 - 303 CHRISTIAN BENOIT 'Indienststellung des Unterwasserarbeitsgerätes '
- NTT REVIEW, vol.4, no.5, Septembre 1992, TOKYO JP pages 100 - 102, XP000358227 YOSHIKI SHIBA ET AL. 'Underwater Robot for Submarine Cable Maintenance'
- PETROLE ET ENTREPRISE, no.32, Mars 1986, PARIS FR pages 16 - 18 CLAUDE BURCKBUCHLER ET AL. 'Les aterrages'

## Description

La présente invention concerne un procédé et un dispositif de pose et d'ensouillage en continu d'une conduite flexible sous-marine, comme par exemple un câble de transmission du type câble à fibres optiques.

Le développement des liaisons entre contrées et même entre continents au moyen de câbles sous-marins, en particulier au moyen de câbles de télécommunication tels que des câbles pour liaisons téléphoniques, a conduit les chercheurs à concevoir et réaliser des procédés et des dispositif capables de poser sur le fond marin de grandes longueurs de câble.

Il est vite apparu que la simple pose d'un câble sur le fond marin n'est pas satisfaisante dans de nombreux cas. En effet, le câble est souvent soumis à des agressions d'origines diverses, comme par exemple les ancrages de bateaux, les chaluts des bateaux de pêche, les effets de la houle et des courants et ceux qui sont générés par les mouvements du navire de pose. Une solution consiste à protéger le câble en le renforçant par une armure de manière à augmenter sa résistance mécanique et son poids et ce, sur une partie de sa longueur jusqu'à une profondeur d'environ 1000 m car, au-delà de cette profondeur, les professionnels considèrent que les risques d'endommagement du câble du fait des activités de pêche et de transports maritimes sont négligeables.

D'autres moyens connus consistent à déposer une couche de gravier ou de cailloux (gravel dumping en anglais) ou des sacs de sable ou de ciment sur le câble. Dans certains cas, le poids du câble est augmenté de façon suffisante pour permettre un auto-enfouissement dans le sol marin.

Une autre solution, de plus en plus utilisée car elle offre une meilleure protection du câble, consiste à ensouiller (enterrer) le câble dans une tranchée creusée dans le fond sous-marin.

Lorsqu'on désire relier deux points distants par un câble sous marin, on utilise un navire spécial, dénommé câblier, qui comprend des organes de stockage tels que des paniers qui sont destinés à recevoir toute la quantité de câble à poser, une ensouilleuse ou charrue qui est utilisée pour ensouiller ou enterrer le câble et tous les équipements mécaniques, hydrauliques et de puissance nécessaires à la pose et au fonctionnement de l'ensouilleuse.

La première opération consiste à dérouler une extrémité du câble à partir du câblier, de façon à pouvoir amener ladite extrêmité sur le rivage. Le câblier et le rivage sont séparés par une distance de plusieurs centaines de mètres et même pouvant excéder le kilomètre. Pendant cette première opération d'atterrage, le câble étant lourd, il est trainé sur le fond, ce qui engendre des forces de frottement élevées. Le câble peut être allégé et tracté flottant à la surface de l'eau. le câble étant alors soumis à des efforts importants dûs à la houle et au courant. Dans tous les cas, il s'est avéré nécessaire de renforcer le câble dans la partie d'atterrage concernée.

La deuxième opération consiste à immerger l'ensouilleuse, reliée au câblier par un câble de traction capable de résister à des forces de plusieurs tonnes, puis de la commander à partir du câblier, à l'aide d'un organe de liaison dénommé ombilical, afin qu'elle procède à l'ensouillage du câble et ce, au fur et à mesure que le câblier se déplace et que le câble est posé sur le fond.

Lorsqu'on souhaite ensouiller la partie du câble qui a été abandonnée sur le fond, posée sans ensouillage dans la zone d'atterrage, Il est nécessaire de faire appel à d'autres équipements spécifiques, cette opération étant désignée comme étant ensouillage après pose.

Un inconvénient majeur de cette manière de procéder réside dans le fait qu'elle implique plusieurs opérations distinctes, en particulier des opérations de protection, et plusieurs équipements différents.

Un autre inconvénient réside dans le fait qu'on est obligé d'embarquer des longueurs importantes de câble renforcé, ce qui augmente le diamètre et le poids et induit une surcharge pour le navire et des équipements plus importants, notamment en ce qui concerne l'ensouilleuse. Le coüt de la pose est sensiblement augmenté ainsi que, bien évidemment, celui de la fabrication du câble.

Bien entendu, les même opérations doivent être répétées à l'approche de l'autre point distant, avec les mêmes inconvénients rappelés ci-dessus.

Lorsque le câblé est relativement fragile et léger, comme c'est le cas pour un câble optique, le renforcement doit être relativement beaucoup plus important.

La présente invention a pour but de remédier aux inconvénients précités et de proposer un procédé de pose et d'ensouillage simultanés, facile à mettre en oeuvre.

La présente invention a pour objet de réaliser une opération de pose avec ensouillage simultané comportant une zone d'atterrage et une zone au large et ce, en une seule opération continue et avec un équipement réduit.

Un autre objet de la présente invention est d'utiliser une seule ensouilleuse automotrice et télécommandée, supportant la bobine de stockage du câble, la télécommande étant assurée soit depuis le rivage, soit depuis un navire.

Un autre objet de la présente invention est de permettre la pose et l'ensouillage simultanés d'un câble entre deux sites à terre séparés par une étendue d'eau.

Un autre objet de la présente Invention est de permettre la pose et l'ensouillage simultanés d'un câble entre un site à terre et une structure au large ou entre un site à terre et un raccordement du câble avec un autre câble posé par un câblier.

La présente invention a pour objet un procédé de pose et d'ensouillage en continu d'une conduite flexible sous-marine, la conduite flexible étant stockée sur au moins une bobine, caractérisé en ce qu'il consiste :
- à utiliser une ensouilleuse automotrice et commandée à distance par l'intermédiaire d'un flexible de commande, ladite ensouilleuse portant au moins une bobine de conduite flexible,
- à commander ladite ensouilleuse à partir d'un site de manière à poser et ensouiller la conduite flexible sur une longueur jusqu'en un premier point prédéterminé,
- à commander ladite ensouilleuse, au-delà dudit premier point prédéterminé, à partir d'un autre site,
- puis à continuer la pose et l'ensouillage de la conduite flexible jusqu'en un deuxième point prédéterminé, l'un des sites étant la terre et l'autre constitué par un engin flottant.

Un avantage de la présente invention réside dans le fait de pouvoir utiliser un câble sans renforcement particulier, sans nécessiter des opérations distinctes de pose et d'ensouillage.

Un autre avantage est la possibilité de faire appel à toute une nouvelle génération de navires qui ne sont pas des câbliers et qui sont destinés à d'autres usages, comme l'exploitation pétrolière au large.

Selon une autre caractéristique, l'ensouilleuse est commandée depuis la terre par un ombilical et depuis l'engin flottant par un autre ombilical, ledit autre ombilical étant relié à un robot sous-marin par l'extrémité opposée à l'engin flottant, de manière à pouvoir le raccorder sur l'ensouilleuse pour la commander à partir de l'engin flottant. Ainsi, on peut mettre en oeuvre des techniques qui ont été utilisées dans d'autres applications comme l'exploitation pétrolière.

La présente invention a également pour objet un dispositif de pose et d'ensouillage d'une conduite flexible, de type comprenant une ensouilleuse automotrice et commandée à distance par l'intermédiaire d'un ombilical qui est relié à une unité de commande de ladite ensouilleuse, caractérisé en ce qu'il comprend en outre une autre unité de commande à distance de l'ensouilleuse et une bobine de stockage de la conduite flexible qui est portée par l'ensouilleuse,de manière à poser et ensouiller en simultané et sous une profondeur d'eau importante.

D'autres avantages et caractéristiques, apparaitront plus clairement à la lecture de la description d'une mise en oeuvre du procédé de l'invention, ainsi que des dessins annexés sur lesquels :
- la figure 1 est une vue latérale d'une ensouilleuse commandée à partir d'une unité de commande située à terre, selon un premier mode de réalisation de l'invention,
- la figure 2 est analogue à la figure 1, l'ensouilleuse ayant posé et ensouillé une partie du câble à ensouiller,
- les figures 3A et 3B sont des vues schématiques représentant les étapes de transfert de commande de l'ensouilleuse depuis la terre vers un navire de pose.
- la figure 4 est une vue schématique de l'ensouilleuse dans une deuxième phase de pose et d'ensouillage et commandée à partir du navire de pose.
- les figures 5A et 5B sont des vues agrandies de l'ensouilleuse et du robot avant et après montage du robot sur l'ensouilleuse.
- les figures 6A et 6B représentent schématiquement les opérations de relevage de l'ensouilleuse selon une première manière de relevage.
- les figures 7A et 7B représentent schématiquement les opérations de relevage de l'ensouilleuse selon une autre manière de relevage.
- la figure 8 est une repésentation schématique d'une opération de pose et d'ensouillage après raccordement d'une autre bobine de câble.

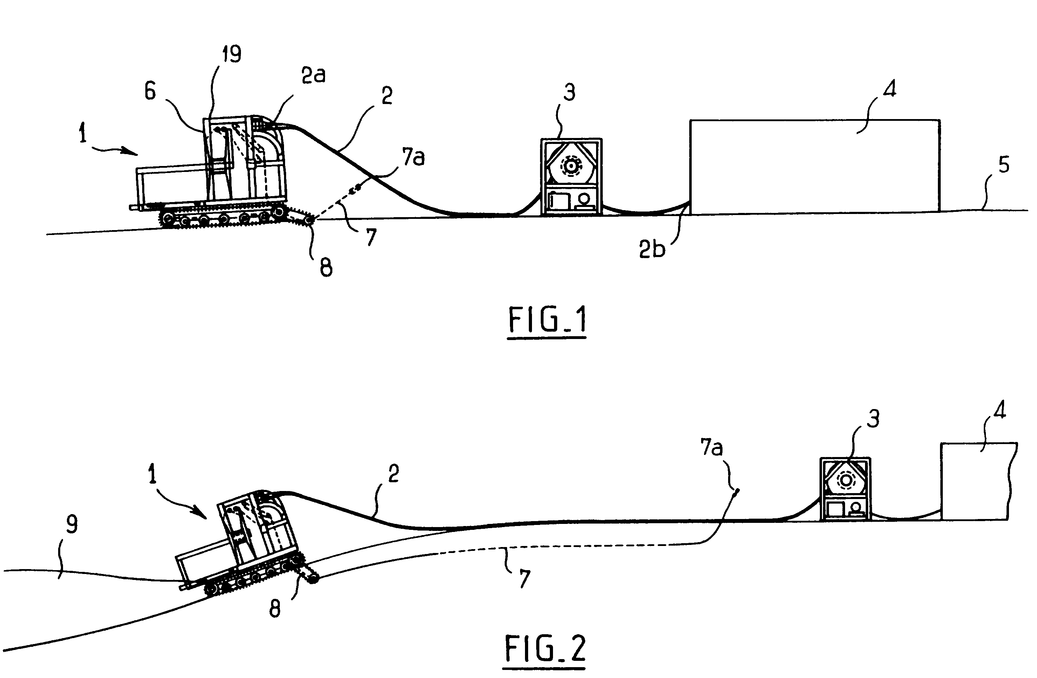

Le procédé de pose et d'ensouillage en continu d'une conduite flexible tel qu'un câble à fibres optiques est décrit à l'appui des figures 1 à 8, suivant une première mise en oeuvre qui consiste d'abord à ensouiller une partie du câble optique sur la terre et dans le sol marin sous une faible profondeur d'eau, la commande étant à terre.

Selon ce premier mode de réalisation, on utilise une ensouilleuse automotrice et télécommandée, par exemple du type à chenilles, qui est connectée à une extrémité 2a d'un premier ombilical 2, enroulé sur un treuil 3 avec joint tournant, et dont l'autre extrémité 2b est raccordée à une unité de commande 4 disposée sur le rivage 5. Une bobine de stockage 6 du câble à ensouiller 7 est montée sur l'ensouilleuse 1, l'extrémité libre 7a pouvant être attachée à une bobine, non représentée, sur laquelle est susceptible d'être enroulée une longueur de câble pour déploiement à terre.

Selon l'invention, le câble à fibres optiques 7 peut présenter une structure particulièrement légère, avec, typiquement, un diamètre extérieur de l'ordre de 15 à 20mm, un poids dans l'air de l'ordre de 0,4 à 0,8 tonnes par kilomètre et un poids dans l'eau de l'ordre de 0,2 à 0,4 tonnes par kilomètre, alors que les méthodes d'installation utilisées à ce jour nécessitent, pour assurer la protection et le renforcement du câble, une armure relativement importante, le câble présentant alors, typiquement, un diamètre extérieur de l'ordre de 25 à 40mm, un poids dans l'air de l'ordre de 1,3 à 4,5 tonnes par kilomètre et un poids dans l'eau de l'ordre de 0,8 à 3 tonnnes par kilomètre. En fonction des caractéristiques du module optique et des conditions locales du site géographique où le câble est installé, il est possible, grâce à l'invention, d'envisager la pose avec l'ensouillage de câbles optiques encore plus légèrs, le câble pouvant, à la limite, être réalisé sans armure de renforcement, et être limité à la partie centrale du câble optique, qu'on appelle module optique (core cable), et le poids du câble dans l'air pouvant être limité à environ 0,1 tonne par kilomètre ou même moins.

La bobine de stockage 6 peut être dimensionnée en fonction des caractéristiques de l'installation à réaliser, en particulier des dimensions du câble optique et de la longueur du câble à poser, ainsi que du dimensionnement de l'ensouilleuse. Le poids total d'une bobine, y compris le câble optique enroulé, peut varier entre quelques centaines de kilogrammes et quelques tonnes. Il est ainsi possible de stocker sur une seule bobine une longueur de câble optique de plusieurs kilomètres, ou plusieurs dizaines de kilomètres. La longueur de la liaison par câble optique peut atteindre ou dépasser 50 kilomètres en une seule opération continue en utilisant une seule bobine, tout en limitant à environ 20 tonnes la valeur totale du poids dans l'air de l'ensouilleuse et de la bobine chargée du câble, ce qui permet de réaliser l'opération avec des moyens navals légers et économiques, d'un type très courant dans les activités d'exploration pétrolière en mer.

L'ensouilleuse 1 est commandée par l'unité de commande 4 et commence la première étape de pose et d'ensouillage du câble 7 dans le sol terrestre. L'ensouilleuse 1 est alimentée en énergie, par exemple hydraulique ou électrique, à partir de l'unité de commande 4, par l'intermédiaire du premier ombilical 2, de façon que le ou les moteurs de l'ensouilleuse 1 entraînent les chenilles qui déterminent le déplacement de l'ensouilleuse 1 à une certaine vitesse. Pendant le déplacement de l'ensouilleuse 1, la bobine 6 est entrainée en rotation de manière à dévider le câble 7 en synchronisme avec ladite vitesse de déplacement de l'ensouilleuse 1. Pendant la pose et l'ensouillage du câble 7, ce dernier est constamment contrôlé en tension de manière à éviter une surtension dans le câble ou un relâchement. Divers moyens de contrôle de tension du câble 7 sont bien connus et ne seront donc pas décrits en détail.

Sur la figure 2, l'ensouilleuse 1 est représentée dans une position dans laquelle une partie du câble 7 a été déroulée, posée et ensouillée dans une tranchée creusée par un outil de tranchage relevable 8. Sur cette figure, l'outil de tranchage est constitué par une chaine de coupe mais il pourrait être constitué par d'autres moyens mécaniques tels que des roues ou des moyens hydrauliques tels que des bras comprenant des buses d'éjection de fluide sous pression, ou une combinaison de ces moyens.

Au cours de cette étape de pose et d'ensouillage du câble 7, l'ombilical 2 est déroulé du treuil 3 et halé sur le sol au fur et à mesure du déplacement de l'ensouilleuse 1.

L'ensouilleuse 1 est représentée au moment de son entrée dans l'eau 9 et, à cet effet, elle présente des caractéristiques de poids et de stabilité qui lui permettent de résister aux actions perturbatrices des courants et de la houle.

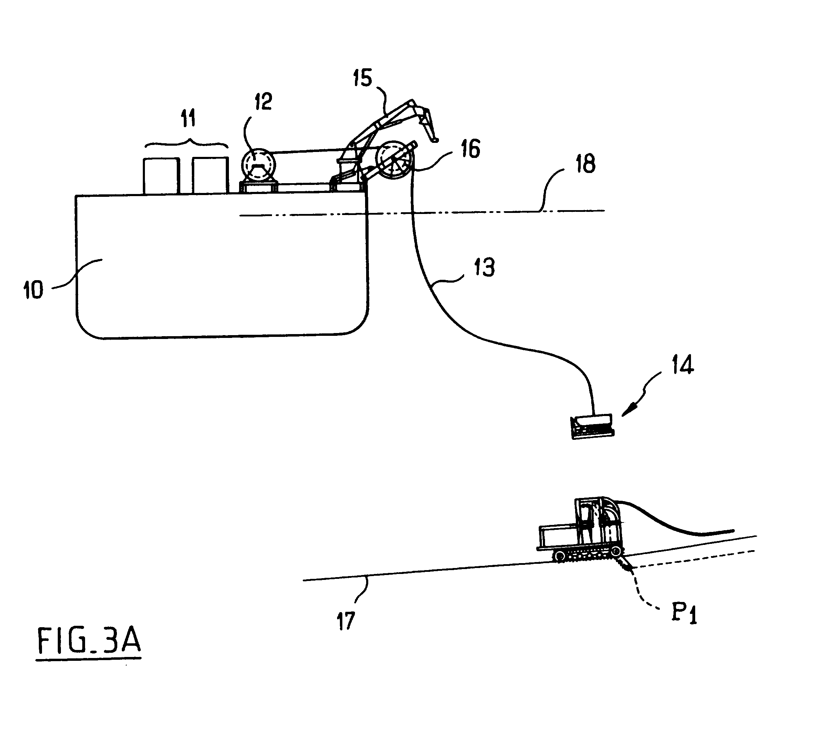

Sur la figure 3A, l'ensouilleuse 1 est représentée en un premier point prédéterminé P₁ et sous une profondeur d'eau permettant l'accès à un navire de pose 10. La présente invention présente l'avantage d'utiliser divers types de navires spécialisés qui ont été développés dans d'autres applications telles que la mise en exploitation des gisements pétroliers au large. Parmi ces navires, on peut citer ceux qui sont connus comme navires de services, de pose de conduites flexibles, de support de travaux sous-marins tels que navires de plongée. Ces navires sont équipés d'un positionnement dynamique et présentent une grande manoeuvrabilité tout en étant relativement légers.

Au point prédéterminé P₁, ensouilleuse 1 est arrêtée tout en étant sous la commande de l'unité de commande 4 à travers l'ombilical 2 dont une partie est représentée sur la figure 3a. Le navire de pose 10 comprend une deuxième unité de commande 11, un treuil de stockage 12 sur lequel est enroulé un deuxième ombilical 13 dont l'extrémité visible est montée sur un robot 14 qui a été mis à l'eau, à partir du navire 10 par une grue 15, l'ombilical 13 étant déroulé du treuil 12 en passant sur une poulie de renvoi 16, au fur et à mesure que le robot 14 s'éloigne du navire 10.

Le robot 14 est constitué par un engin du type connu sous la dénomination ROV (Remote Operated Vehicle), commercialisé par la Société Américaine PERRY TRITECH Inc. Ce type d'engin est équipé de moyens de contrôle de flottabilité tout en étant entièrement télécommandé. Des propulseurs sont prévus pour permettre au ROV de se déplacer de la manière désirée entre le fond 17 et la surface 18. Des bras avec outils manipulateurs, des équipements de visualisation (caméras de télévision) et des systèmes de localisation du type à ultra-sons sont également prévus sur le ROV.

Le ROV 14 a été adapté pour réaliser certaines fonctions spécifiques de l'invention telles que le raccordement de l'ombilical 13 à l'ensouilleuse 1, de manière à commander ladite ensouilleuse 1 à partir de la deuxième unité de commande 11.

Selon une caractéristique de l'invention, l'ombilical 13 assure, à partir de la deuxième unité de commande 11, la télécommande et l'alimentation en énergie à la fois du ROV 14 et de l'ensouilleuse 1 par l'intermédiaire d'une multiplicité de circuits électriques, électroniques, hydrauliques ou autres, lesdits circuits étant logés dans ledit ombilical 13.

Le ROV 14 localise l'ensouilleuse 1 et se déplace dans sa direction de manière à se monter et à se verrouiller correctement sur un réceptacle prévu à cet effet sur l'ensouilleuse 1. Le ROV peut réaliser ainsi le raccordement étanche entre les circuits de l'ombilical 13 et les circuits correspondants de l'ensouilleuse 1 qui est toujours raccordée par le premier ombilical 2 à l'unité de commande à terre 14.

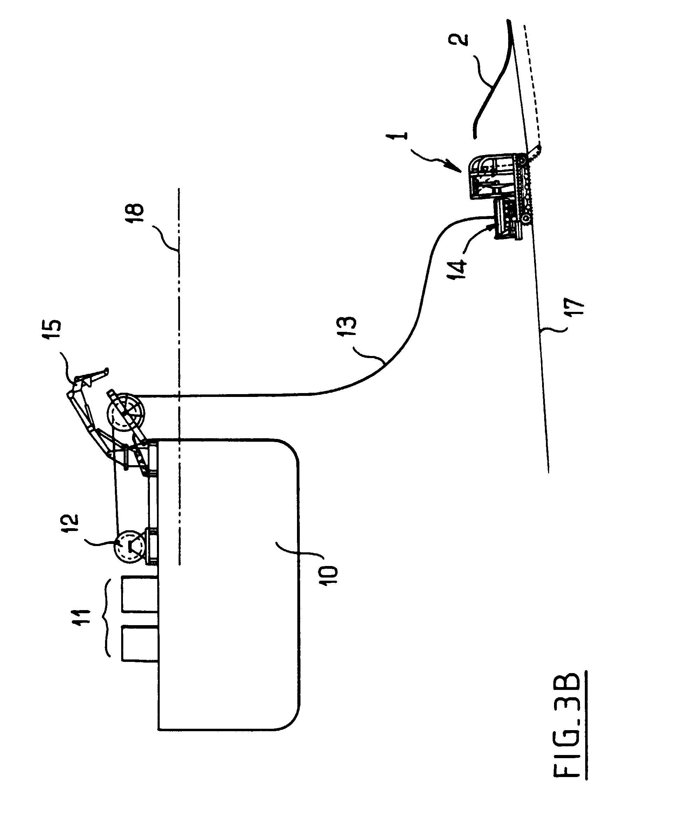

une fois que le ROV 14 a effectué le raccordement entre la deuxième unité de commande 11 et l'ensouilleuse 1, on procède à la déconnexion du premier ombilical 2 de ladite ensouilleuse et à son rembobinage sur le treuil 3, à partir de la terre par rotation du treuil 3 (figure 3b).

La déconnexion de l'ombilical 2 peut être effectuée depuis le navire 10 à l'aide d'outils appropriés du ROV 14 ou de circuits adéquats hydrauliques et/ou électriques de l'ensouilleuse 1 par télécommande.

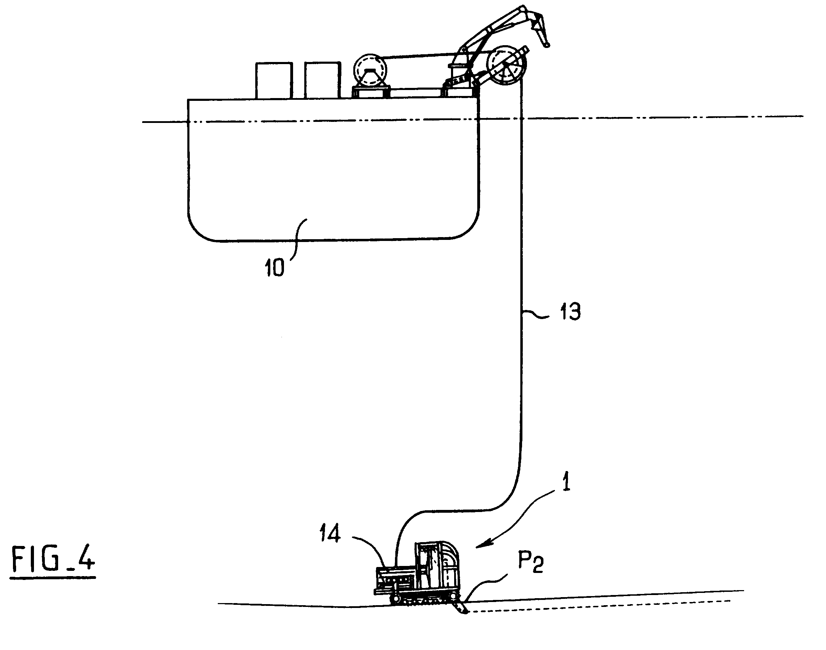

Dès que la déconnexion de l'ombilical 2 est effectuée, l'ensouilleuse 1 est commandée par la seule deuxième unité de commande 11 et procède à la deuxième étape de pose et d'ensouillage du câble 7, ainsi que cela est représenté sur la figure 4, c'est-à-dire jusqu'à un deuxième point prédéterminé P₂ où la pose et l'ensouillage du câble est momentanément ou définitivement achevée.

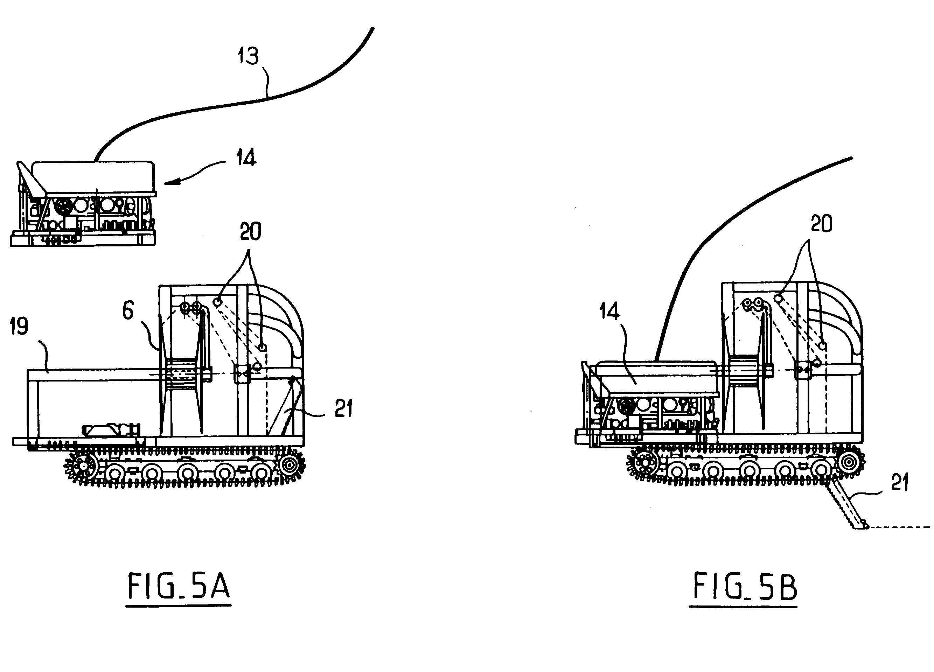

Dans ce qui précède, on a fait référence à une ensouilleuse 1 munie d'un outil de coupe 8, et d'un ROV 14. Sur les figures 5A et 5B, ces éléments sont représentés à plus grande échelle, la figue 5A représentant l'arrivée ou le départ du ROV de l'ensouilleuse 1, et la figure 5B représentant le ROV monté et verrouillé sur l'ensouilleuse 1, cette dernière étant représentée ici dotée de moyens de coupe différents de ceux représentés sur les figures 1 à 4.

L'ensouilleuse 1 comprend une platine 19 de support du ROV 14, ainsi qu'un système 20 de poulies éventuellement motorisées permettant d'assurer le niveau de tension approprié dans le câble 7 qui est déroulé à partir de la bobine 6.

L'outil de coupe représenté sur les figures 5A et 5B est constitué par des bras relevables 21 pourvus d'orifices ou de buses à travers lesquels un fluide sous pression est projeté sur le sol, ce qui provoque le creusement d'une tranchée dans laquelle le câble 7 est posé et ensouillé. Les bras 21 sont dans la position relevée sur la figure 5A et dans la position abaissée de travail sur la figue 5B.

Dans une variante non représentée, on peut déconnecter l'ombilical 2 à partir de la terre et non plus à parti du navire de pose. Les moyens pour effectuer une telle déconnexion sont connus et ne seront pas décrits en détail. Une telle procédure permet de transférer l'unité de commande 4 de la terre sur le navire de pose 10.

Il est possible de tansférer l'unité de commande 4 seule sur le navire 10 et de la connecter au deuxième ombilical 13 enroulé sur son treuil 12. La connexion de l'ombilical du navire avec l'ensouilleuse peut être effectuée avec l'aide d'un ROV indépendant du type standard et déployé séparemment depuis le navire, ou en utilisant, depuis le navire, les dispositifs de réentrée de conduite tels que ceux utilisés dans l'industrie pétrolière, ou encore par plongeur.

Il est également possible de transférer l'ombilical 2 seul sans opération de connexion/déconnexion d'avec l'ensouilleuse 1, l'ombilical 2 étant alors raccordé à l'unité de commande 11 disponible sur le navire ou de le transférer en même temps que l'unité de commande 4 qui était sur le rivage.

Lorsque la deuxième étape de pose et d'ensouillage du câble 7 est terminée, l'ensouilleuse 1 peut être récupérée et montée à bord du navire 10 de plusieurs manières.

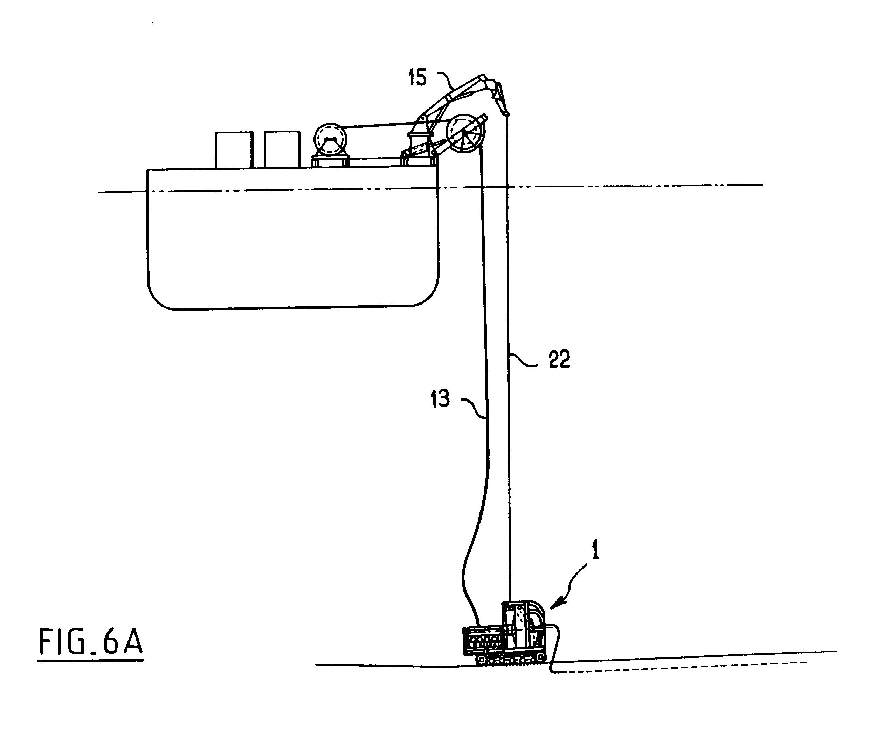

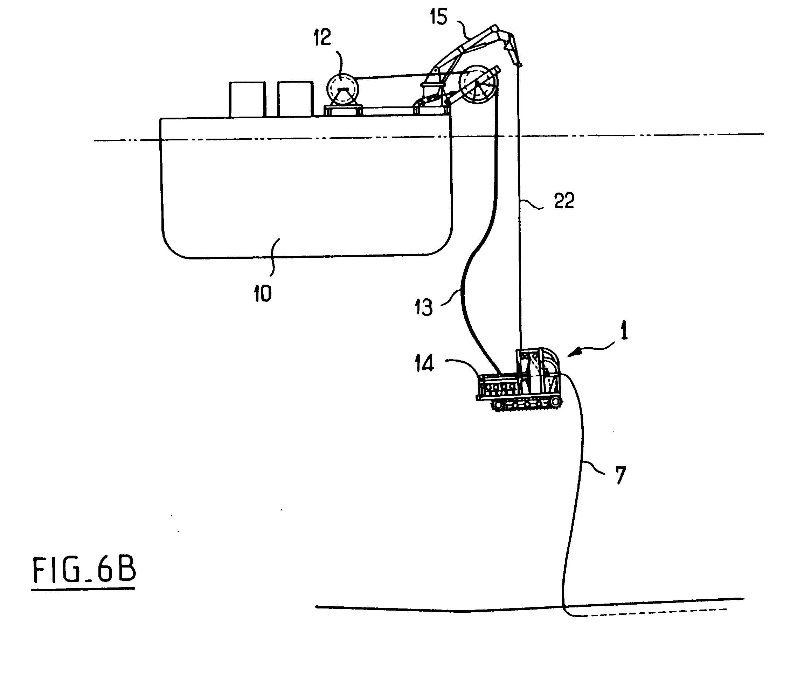

Une manière de procéder consiste à descendre un câble de traction et de levage 22 suspendu à la grue 15, de l'accrocher par des moyens appropriés sur l'ensouilleuse 1 (figure 6A), et de la remonter avec son ROV 14 sur le navire 10. Pendant la remontée de l'ensouilleuse 1, le ROV 14 est maintenu connecté, de manière à permettre le dévidage du câble 7 tout en le maintenant à une tension désirée jusqu'à l'arrivée de l'ensouilleuse 1 sur le navire (figure 6B).

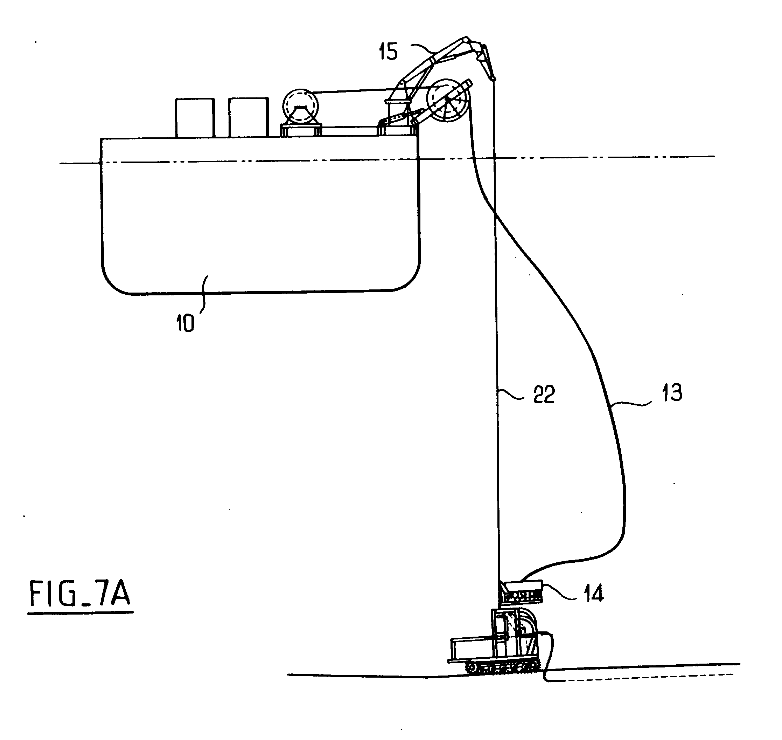

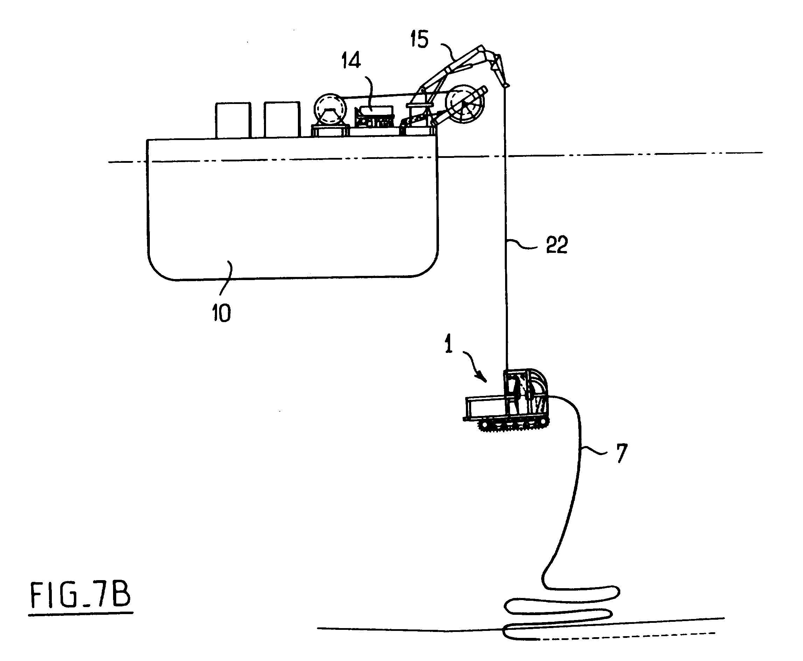

Une autre manière de procéder consiste dans une phase à déverrouiller le ROV 14 de l'ensouilleuse 1, le ROV remontant à un certain niveau dans l'eau pour saisir une extrémité du câble de levage 22. Dans une deuxième phase, le ROV redescend jusqu'à l'ensouilleuse 1 pour accrocher le câble de levage 22 à l'ensouilleuse 1 (figure 7A). De préférence, avant la remontée du ROV 14, on déroule sur le fond une quantité de câble 7 au moins égale à la profondeur d'eau. Le ROV 14 ayant été remonté à bord du navire 10, on procède à la récupération de l'ensouilleuse 1 de la manière indiquée sur la figure 7B, la quantité de câble déroulée et posée sur le fond étant alors suspendue entre l'ensouilleuse à la surface et le fond.

La récupération de l'ensouilleuse 1 permet soit une intervention sur l'équipement sous-marin, la pose et l'ensouillage ayant repris lorsque l'équipement sous-marin est redescendu sur le fond, soit une reprise du câble 7 par un autre navire tel qu'un câblier pour le connecter à un autre câble similaire qui est transporté et posé par le câblier selon la technique habituelle, soit de déconnecter le câble 7 de l'ensouilleuse pour le raccorder à une structure au large ou pour l'abandonner au fond en vue d'un raccordement ultérieur.

La réception de l'ensouilleuse 1 est utilisé lorsqu'il est nécessaire de poser et d'ensouiller, selon le procédé de l'invention, une deuxième longueur de câble 23 distincte de la longueur de câble 7 et qui est enroulée et stockée sur une bobine 24 différente de la bobine 6. Le câble 7 est alors sorti de la bobine 6 pour être raccordé en 25 avec l'extrémité libre du câble 23, la bobine 24 étant monté à la place de la bobine 6 sur l'ensouilleuse 1. Les moyens de descente de l'ensouilleuse 1 sur le fond marin peuvent être identiques à l'un des moyens de relevage décrits à propos des figure 6 et 7.

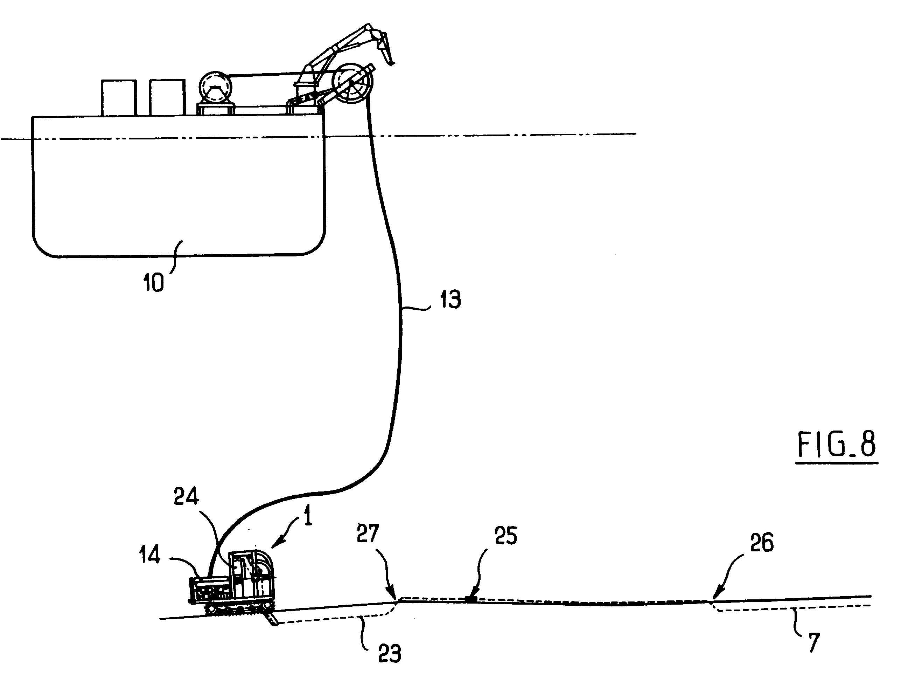

Entre les parties ensouillées des câbles 7 et 23, il y a une certaine longueur de câble 7 et 23, entre les points 26 et 27, qui, normalement, correspond à la protondeur d'eau et qui n'est pas ensouillée (figure 8). Cette longueur de câble 7 qui reste non ensouillée pendant l'ensouillage du câble 23 peut, dans une étape ultérieure, être ensouillée en utilisant la même ensouilleuse 1, suivant le procédé de post-ensouillage bien connu en soi, après que l'opération de l'ensouillage du câble 23 ait été complètement terminée.

Dans un mode de mise en oeuvre du procédé selon l'invention, les étapes de pose et d'ensouillage d'une ou plusieurs sections de câble décrites à l'appui des figures 1 a 8, peuvent être suivies par une autre opération de pose-ensouillage simultané dans une autre zone d'atterrage sur un autre rivage ou site qui est séparé du premier site terrestre par une étendue d'eau. Pour ce faire, on amène l'ensouilleuse 1 jusqu'en un point prédéterminé, au début de la deuxième zone d'atterrage, où le navire 10 peut encore accéder. L'unité de commande 4 avec le treuil 3 et l'ombilical du premier site sont amenés sur le deuxième site. Bien entendu, on peut utiliser d'autres moyens analogues ou similaires qui seraient déposés sur le deuxième rivage. L'ensouilleuse 1 étant arrêtée au point prédéterminé ci- dessus et encore connectée à l'unité de commande 11 du navire par l'intermédiaire de l'ombilical 13 et du ROV 14, on peut faire venir l'ombilical du deuxième site par divers moyens connus tels qu'un câble de traction fixé sur la tête de l'ombilical et tiré par un treuil du navire et passant par une poulie de renvoi solidaire de l'ensouilleuse 1. Le raccordement final de l'ombilical avec l'ensouilleuse peut, par exemple, être effectué par le ROV ou un des moyens décrits précédemment. On libère ensuite l'ombilical 13 de l'ensouilleuse 1 pour le remonter avec le ROV 14 sur le navire 10. Par télécommande depuis de deuxième rivage, l'opération de pose et d'ensouillage simultané en atterrage est effectuée de la même façon mais en sens inverse que l'opération similaire effectuée en premier atterrage décrit ci-dessus. On peut noter que, dans ce cas, et par rapport aux figues 1 et 2, l'ombilical 2 est monté sur l'ensouilleuse 1 du côté opposé à celui portant l'outil de coupe et le câble posé.

La présente invention peut également être mise en oeuvre dans une opération mer-terre pour la pose et l'ensouillage simultané d'un câble 7 à partir d'un lieu situé en mer jusqu'à un rivage et comportant successivement une pose et ensouillage au large sous la commande du navire 10 et une pose et ensouillage en zone d'atterrage sous la commande depuis ledit rivage. De la même façon que dans l'opération terre-mer décrite précédemment, l'extrémité du câble qui est située en mer peut constituer une extrémité raccordée à une structure au large telle qu'une plate-forme ou un raccordement de câble posé séparemment par un câblier selon la procédure usuelle.

D'une façon générale, pendant l'étape de pose et d'ensouillage simultanés au large et en cas d'urgence, si on souhaite interrompre ladite étape, il est possible d'abandonner sur le fond l'ensouilleuse 1 et sa bobine 6 avec le câble posé et ensouillé, et de libérer le navire 10 en déconnectant le ROV 14 et de le remonter avec l'ombilical 13. Ultérieurement, on peut reprendre l'opération de pose et d'ensouillage simultané du câble enroulé sur la bobine 6, grâce au ROV 14 qui réalise avec facilité la localisation de l'ensouilleuse, le guidage et la connexion de l'ombilical 13 sur l'ensouilleuse 1 restée au fond.

Il est également possible de séparer la bobine 6 ou 24 par rapport à l'ensouilleuse 1 de façon à pouvoir la remonter depuis le navire 10 en même temps qu'une partie du câble 7 ou 23, l'ensouilleuse 1 restant immobilisée au fond. L'ensouilleuse 1 étant équipée d'un chassis de support de la bobine et d'un système de guidage et verrouillage adéquats, Il est possible de redescendre et remettre en place la bobine sur l'ensouilleuse grâce à des méthodes de réentrée bien connues dans les opérations sous-marines d'exploitation pétrolière. En particulier, le ROV 14 peut faciliter cette opération.

Bien qu'elle ne vise pas, normalement, l'installation de câbles sur de très grandes distances telles que des liaisons intercontinentales où les profondeurs d'eau sont couramment extrêmement importantes, ces opérations restant typiquement du ressort des navires câbliers, la présente invention peut être mise en oeuvre dans des profondeurs d'eau importantes, pouvant être de plusieurs centaines de mètres. Il est possible d'opérer, si nécessaire, dans des profondeurs d'eau dépassant 1000 mètres, dans des zones où l'ensouillage n'est pas requis, normalement, la technologie actuelle des équipements utilisés, y compris les ombilicaux, permettant effectivement de dépasser cette limite.

Le procédé selon l'invention peut être appliqué à la pose et à l'ensouillage simultané de tout type de câble de transmission, comme par exemple les câbles coaxiaux pour transmission analogique, ou de câbles électriques ou de conduites tubulaires flexibles simples ou multiples du type de celles commercialisées par la déposante.

## Revendications

1. Procédé de pose et d'ensouillage en continu d'une conduite flexible (7) sous-marine. la conduite flexible étant stockée sur au moins une bobine (6), caractérisé en ce qu'il consiste :
- à utiliser une ensouilleuse automotrice (1) et commandée à distance par l'intermédiaire d'un flexible de commande (2), ladite ensouilleuse étant susceptible de porter ladite au moins une bobine de conduite flexible,
- à commander ladite ensouilleuse (1) portant ladite bobine (6) à partir d'un site (5) de manière à poser et ensouiller simultanément la conduite flexible sur une longueur jusqu'en un premier point prédéterminé (P1),
- à commander ladite ensouilleuse, au-delà du premier point prédéterminé (P1), à partir d'un autre site (10),
- puis à continuer la pose et l'ensouillage de la conduite flexible jusqu'en un deuxième point prédéterminé (P2), l'un des sites étant la terre et l'autre constitué par un engin flottant.

2. Procédé selon la revendication 1, caractérisé en ce qu'il consiste à utiliser deux unités de commande distinctes (4 , 11), l'une (4) étant disposée à terre et l'autre (11) étant disposée sur l'engin flottant (10).

3. Procédé selon la revendication 1, caractérisé en ce qu'il consiste à utiliser une unité de commande unique qui est transférée d'un site à l'autre site.

4. Procédé selon l'une des revendications 1 à 3, caractérisé en ce qu'il consiste à transférer le flexible de commande (2) d'un des sites à l'autre.

5. Procédé selon l'une des revendications 1 à 3, caractérisé en ce que l'ensouilleuse est commandée depuis la terre (15) par un ombilical (2) et depuis l'engin flottant par un autre ombilical (13), ledit autre ombilical (13) étant relié à un robot sous-marin (14) par l'extrémité opposée à l'engin flottant de manière à pouvoir le raccorder sur l'ensouilleuse pour la commander à partir de l'engin flottant.

6. Procédé selon la revendication 5, caractérisé en ce que la commande du robot est réalisée par ledit autre ombilical (13).

7. Procédé selon les revendications 5 ou 6. caractérisé en ce que le robot (14) déconnecte ledit un ombilical (4).

8. Procédé selon l'une des revendications 1 à 7, caractérisé en ce que la conduite flexible (7) est constituée par un câble de transmission tel qu'un câble à fibre optique.

9. Procédé selon les revendications 1, 2 et 5, caractérisé en ce que la conduite flexible (7) est posée et ensouillée simultanément entre deux rivages séparés par une étendue d'eau, et comprenant au moins deux zones de pose et d'ensouillage simultanés en atterrage et une zone de pose et d'ensouillage simultanés au large.

10. Procédé selon les revendications 1, 2 et 5, caractérisé en ce que la conduite flexible est posée et ensouillée simultanément à partir d'un rivage jusqu'à un lieu situé au large, et comprenant au moins une zone de pose et d'ensouillage simultanés en atterrage, et une zone de pose et d'ensouillage simultanés au large.

11. Procédé selon les revendications 1, 2 et 5, caractérisé en ce que la conduite flexible est posée et ensouillée simultanément à partir d'un lieu situé au large jusqu'à un rivage, et comprenant au moins une zone de pose et d'ensouillage simultanés au large, et une zone de pose et d'ensouillage simultanés en atterrage.

12. Procédé selon l'une quelconque des revendications précédentes, caractérisé en ce que la conduite flexible est constituée par au moins deux sections distinctes posées et ensouillées l'une après l'autre après raccordement.

13. Dispositif de pose et d'ensouillage en simultané et sous une profondeur d'eau d'une conduite flexible (7), enroulée sur une bobine de stockage (6), du type comprenant une ensouilleuse automotrice (1), commandée à distance par l'intermédiaire d'un ombilical (2) qui est relié à une unité de commande (4) de ladite ensouilleuse (1), ladite unité de commande (4) étant située en un premier site (5), caractérisé en ce que la bobine de stockage (6) est montée sur l'ensouilleuse (1) et en ce qu'il comprend en outre des moyens (11, 14) pour commander ladite ensouilleuse (1) à partir d'un autre site (10) lorsque ladite ensouilleuse (1) atteint un premier point prédéterminé (P1), de manière à poser et ensouiller en simultané ledit câble flexible (7) sous une profondeur d'eau importante.

14. Dispositif selon la revendication 13, caractérisé en ce qu'il comprend des moyens (14) pour connecter ou déconnecter à distance l'ensouilleuse (1) de l'ombilical (2) qui la relie à l'une des unités de commande.

15. Dispositif selon la revendication 14, caractérisé en ce que les moyens de connexion/déconnexion, comprennent un robot télécommandé (14), autopropulsé, et apte à être monté sur l'ensouilleuse et à réaliser des connexions étanches entre un ombilical (2) et l'ensouilleuse, ledit ombilical reliant une des unités (4) de commande et ledit robot.

16. Dispositif selon la revendication 15, caractérisé en ce que l'ombilical comprend les circuits de commande du robot et de l'ensouilleuse.

## Patentansprüche

1. Verfahren zum kontinuierlichen Verlegen und Eingraben einer flexiblen Unterwasserleitung (7), wobei die flexible Leitung auf wenigstens einer Trommel (6) gelagert ist, gekennzeichnet durch di folgenden Schritte:
- Verwenden eines selbstfahrenden Eingrabegeräts (1), das durch ein Steuerkabel (2) ferngesteuert ist, wobei das Eingrabegerät in der Lage ist, die wenigstens eine Trommel mit der flexiblen Leitung zu tragen;
- Steuern des die Trommel (6) tragenden Eingrabegeräts (1) von einem Standort (5) aus, derart, daß die flexible Leitung über eine bestimmte Strecke bis zu einem ersten vorbestimmten Punkt (P1) gleichzeitig verlegt und eingegraben wird;
- Steuern des Eingrabegeräts von einem anderen Standort (10) aus über den ersten vorbestimmten Punkt (P1) hinaus,
- Fortsetzen des Verlegens und Eingrabens der flexiblen Leitung bis zu einem zweiten vorbestimmten Punkt (P2), wobei einer der Standorte an Land und der andere Standort ein schwimmendes Fahrzeug ist,

2. Verfahren nach Anspruch 1, dadurch gekennzeichnet, daß ferner zwei unterschiedliche Steuereinheiten (4, 11) verwendet werden, von denen eine (4) auf dem Land und die andere (11) auf dem schwimmenden Fahrzeug (10) angeordnet ist.

3. Verfahren nach Anspruch 1, dadurch gekennzeichnet, daß eine einzige Steuereinheit verwendet wird, die von einem Standort zum anderen bewegt wird.

4. Verfahren nach einem der Ansprüche 1 bis 3, dadurch gekennzeichnet, daß das Steuerkabel (2) von einem Standort zum anderen verbracht wird.

5. Verfahren nach einem der Ansprüche 1 bis 3, dadurch gekennzeichnet, daß das Eingrabegerät von Land (15) aus über eine Verbindungsleitung (2) und von dem schwimmenden Fahrzeug aus über eine andere Verbindungsleitung (13) gesteuert wird, wobei die andere Verbindungsleitung (13) mit ihrem dem schwimmenden Fahrzeug entgegengesetzten Ende mit einem Unterwasserroboter (14) derart verbunden ist, daß dieser zur Steuerung des Eingrabegerätes von dem schwimmenden Fahrzeug aus an das Eingrabegerät anschließbar ist.

6. Verfahren nach Anspruch 5, dadurch gekennzeichnet, daß die Steuerung des Roboters über die andere Verbindungsleitung (13) erfolgt.

7. Verfahren nach Anspruch 5 oder 6, dadurch gekennzeichnet, daß der Roboter (14) die eine Versorgungsleitung (4) unterbricht.

8. Verfahren nach einem der Ansprüche 1 bis 7, dadurch gekennzeichnet, daß die flexible Leitung (7) ein Übertragungskabel, beispielsweise ein optisches Faserkabel ist.

9. Verfahren nach den Ansprüchen 1, 2 und 5, dadurch gekennzeichnet, daß die flexible Leitung (7) gleichzeitig zwischen zwei durch ein Gewässer getrennten Ufern verlegt und eingegraben wird, und wenigstens zwei Zonen gleichzeitigen Verlegens und Eingrabens in Ufernähe und im offenen Wasser eine Zone des gleichzeitigen Verlegens und Eingrabens vorgesehen sind.

10. Verfahren nach den Ansprüchen 1, 2 und 5, dadurch gekennzeichnet, daß die flexible Leitung von einer Stelle am Ufer aus bis zu einem im offenen Wasser liegenden Punkt gleichzeitig verlegt und eingegraben wird, und wenigstens eine Zone gleichzeitigen Verlegens und Eingrabens in Ufernähe und im offenen Wasser eine Zone des gleichzeitigen Verlegens und Eingrabens vorgesehen ist.

11. Verfahren nach den Ansprüchen 1, 2 und 5, dadurch gekennzeichnet, daß die flexible Leitung von einer Stelle im offenen Wasser aus bis zu einem Ufer gleichzeitig verlegt und eingegraben wird, und wenigstens eine Zone gleichzeitigen Verlegens und Eingrabens im offenen Wasser und in Ufernähe eine Zone des gleichzeitigen Verlegens und Eingrabens vorgesehen ist.

12. Verfahren nach einem der vorhergehenden Ansprüche, dadurch gekennzeichnet, daß die flexible Leitung aus wenigstens zwei verschiedenen Abschnitten besteht, die nach dem Zusammenfügen nacheinander verlegt und eingegraben werden.

13. Vorrichtung zum gleichzeitigen Verlegen und Eingraben einer auf einer Trommel (6) aufgerollten flexiblen Leitung (7) unter Wasser, des Typs mit einem selbstfahrenden Eingrabegerät (1), das über eine Verbindungsleitung (2), die mit einer Steuereinheit (4) des Eingrabegeräts (1) verbunden ist, ferngesteuert ist, wobei die Steuereinheit (4) sich an einem ersten Standort (5) befindet, dadurch gekennzeichnet, daß die Vorratstrommel (6) auf dem Eingrabegerät (1) angebracht ist und daß sie ferner Einrichtungen (11, 14) zum Steuern des Eingrabegeräts (1) von einem anderen Standort aus (10) aufweist, wenn das Eingrabegerät (1) einen ersten vorbestimmten Punkt (P1) erreicht, derart, daß das flexible Kabel (7) in erheblicher Wassertiefe gleichzeitig verlegt und eingegraben werden kann.

14. Vorrichtung nach Anspruch 13, dadurch gekennzeichnet, daß sie eine Einrichtung (14) zum ferngesteuerten Verbinden oder Trennen des Eingrabegeräts (1) mit bzw. von der Verbindungsleitung (2), die dieses mit einer der Steuereinheiten verbindet, aufweist.

15. Vorrichtung nach Anspruch 14, dadurch gekennzeichnet, daß die Einrichtung zum verbinden und Trennen einen ferngesteuerten Roboter (14) mit Eigenantrieb aufweist, der an dem Eingrabegerät anbringbar ist und in der Lage ist, dichte Verbindungen zwischen einer Verbindungsleitung (2) und dem Eingrabegerät herzustellen, wobei die Verbindungsleitung eine der Steuereinheiten (4) und den Roboter verbindet.

16. Vorrichtung nach Anspruch 15, dadurch gekennzeichnet, daß die Verbindungsleitung die Steuerkreise des Roboters und des Eingrabegeräts aufweist.

## Claims

1. Method for continuously laying and burying an underwater flexible conduit (7), the flexible conduit being stored on at least one reel (6), characterised in that it consists in:
- using a self-propelled sea plough (1) remote-controlled via a control flexible (2), said sea plough carrying said at least one reel of flexible conduit,
- controlling said sea plough (1) carrying said reel (6) from a site (5) so as to lay and bury a length of the flexible conduit up to a first predetermined point (P₁).
- controlling said sea plough beyond said first predetermined point (P₁) from another site (10), then
- continuing laying and burying of the flexible conduit as far as a second predetermined point (P₂), one of said sites being the land and the other comprising a waterborne vessel.

2. Method according to claim 1 characterised in that it consists in using two separate control units (4, 11), one (4) on land and the other (11) on the waterborne vessel (10).

3. Method according to claim 1 characterised in that it consists in using a single control unit which is transferred from one site to the other site.

4. Method according to any one of claims 1 to 3 characterised in that it consists in transferring the control flexible (2) from one site to the other site.

5. Method according to any one of claims 1 to 3 characterised in that sea plough is controlled from the land (15) via an umbilical (2) and from the waterborne vessel via another umbilical (13), said other umbilical (13) being connected to an underwater robot (14) at the end opposite the waterborne vessel so that it can be connected to the sea plough for controlling the latter from the waterborne vessel.

6. Method according to claim 5 characterised in that the robot is controlled via said other umbilical (13).

7. Method according to claim 5 or claim 6 characterised in that the robot (14) is adapted to disconnect said one umbilical (2).

8. Method according to any one of claims 1 to 7 characterised in that the flexible conduit (7) is a transmission cable such as an optical fibre cable.

9. Method according to claims 1, 2 and 5 characterised in that the flexible conduit (7) is laid and buried simultaneously between two shores separated by a stretch of water and comprising at least two landing simultaneous laying and burying areas and one offshore simultaneous laying and burying area.

10. Method according to claims 1, 2 and 5 characterised in that the flexible conduit is laid and buried simultaneously from one shore to an offshore site and comprising at least one landing simultaneous laying and burying area and one offshore simultaneous laying and burying area.

11. Method according to claims 1, 2 and 5 characterised in that the flexible conduit is laid and buried simultaneously from an offshore site to the shore and comprising at least one offshore simultaneous laying and burying area and one landing simultaneous laying and burying area.

12. Method according to any one of the preceding claims characterised in that the flexible conduit comprises at least two separate sections laid and buried one after the other after connecting them.

13. Device for simultaneously laying and burying a flexible conduit (7) wound on a reel (6), of the type comprising a self-propelled sea plough (1) remote-controlled via an umbilical (2) connected to a control unit (4) of said sea plough (1), said control unit (4) being at a first site (5), characterised in that the reel (6) is mounted on the sea plough (1) and in that it further comprises means (11, 14) for controlling said sea plough (1) from another site (10) when said sea plough (1) reaches a first predetermined point (P₁) to lay and bury simultaneously said flexible cable (7) in deep water.

14. Device according to claim 13 characterised in that it comprises means (14) for remotely connecting the sea plough (1) to and disconnecting it from the umbilical (2) that connects it to one of the control units.

15. Device according to claim 14 characterised in that the connection/disconnection means comprise a self-propelled remote-controlled robot (14) adapted to be mounted on the sea plough and to make watertight connections between an umbilical (2) and the sea plough, said umbilical connecting one of the control units (4) and said robot.

16. Device according to claim 15 characterised in that the umbilical incorporates control circuits of the robot and the sea plough.
